# EUROPEAN PATENT SPECIFICATION

(11) **EP 3 547 607 B1**
(45) Date of publication and mention of the grant of the patent: **29.06.2022**
(21) Application number: 19162330.5
(22) Date of filing: 12.03.2019
(51) Int. Cl.: H04L 9/32

(54) **CONTROLLER, CONTROL METHOD, AND NON-TRANSITORY STORAGE MEDIUM STORING PROGRAM**
STEUERGERÄT, STEUERUNGSVERFAHREN UND NICHTTRANSITORISCHES SPEICHERMEDIUM ZUM SPEICHERN EINES PROGRAMMS
CONTRÔLEUR, PROCÉDÉ DE COMMANDE ET SUPPORT D'INFORMATIONS NON TRANSITOIRE STOCKANT UN PROGRAMME

(30) Priority: 30.03.2018 JP 2018068837
(43) Date of publication of application: 02.10.2019
(73) Proprietor: TOYOTA JIDOSHA KABUSHIKI KAISHA, Toyota-shi, Aichi-ken 471 8571 (JP)
(72) Inventor: ANDO, Eisuke, Toyota-shi, Aichi-ken,, 471-8571 (JP)
(74) Representative: Kuhnen & Wacker Patent- und Rechtsanwaltsbüro PartG mbB

(56) References cited:
- CN-A- 107 749 845
- US-A1- 2017 313 320
- CESAR BERNARDINI ET AL: "Security and privacy in vehicular communications: Challenges and opportunities", VEHICULAR COMMUNICATIONS, vol. 10, 1 October 2017 (2017-10-01), pages 13-28, XP055435906, ISSN: 2214-2096, DOI: 10.1016/j.vehcom.2017.10.002

## Description

### BACKGROUND OF THE INVENTION

### 1. Field of the Invention

The invention relates to a controller, a control method, and a non-transitory storage medium storing a program.

### 2. Description of Related Art

In recent years, service providers focus on development, and the like, concerning an automated driving technology for vehicles. For example, Japanese Patent Application JP 2017-197066 A describes a technique for controlling automated driving based on information unique to an occupant of a vehicle and received from a server in order to perform automated driving suitable for the occupant of the vehicle.

A vehicle control-system is disclosed by US 2017/313320 A1 that includes an automated driving controller and a vehicle-side communication section. The automated driving controller executes automated driving in which at least one out of speed control or steering control of a vehicle is performed automatically, and executes automated driving in a mode from out of plural modes with differing degrees of automated driving. The vehicle-side communication section communicates with a server for managing characteristic information of a vehicle occupant. To this extent, the vehicle control-system authenticates whether the vehicle occupant has proper authorization. From CN 107 749 845 A the use of block-chain technology as an anti-attack method for a CAN bus packet is known.

### SUMMARY OF THE INVENTION

When an interface for vehicle control is open to service providers and the vehicle control is available via the interface, it is conceivable to set use authority depending on control information related to the vehicle control. In this case, appropriate authority management is desired.

The invention provides a controller according to claim 1, a control method according to claim 4, and non-transitory storage medium according to claim 6, storing a program, which are able to perform appropriate authority management when use authority is set over control information for a vehicle.

A first aspect relates to a controller forming part of a vehicle in a vehicle control system including the vehicle, an information processing device, and a server. The controller includes a communication unit and a processing unit. The communication unit is configured to acquire control information for the vehicle from the information processing device via wired communication or wireless communication. The processing unit is configured to execute a process of starting vehicle control based on the control information and to request a plurality of electronic control units provided in the vehicle separately from the controller to execute an authentication process for use authority of a service provider in parallel while executing the process of starting vehicle control, wherein the processing unit is configured to continue or suspend the process of starting vehicle control depending on a result of the authentication process for the use authority of the service provider over the control information that is transmitted to the controller by the ECUs. The authentication process for the use authority is executed based on subscription information for determining the use authority of the service provider and the control information. The control information includes identification information of the service provider and an application programming interface, API, to be used. The subscription information includes the identification information of the service provider with the use authority over one or more APIs. The subscription information about the use authority of the service provider is composed of a block-chain managed by the plurality of electronic control units in the vehicle.

In the first aspect, the processing unit may be configured to continue or suspend the process of starting the vehicle control depending on the result of the authentication process each time the control information is acquired.

In the first aspect, the subscription information may include information that associates user identification information that identifies a user of the control information with the use authority given to the user.

A second aspect relates to a control method. The control method includes: a step of acquiring control information for a vehicle from an information processing device via wired communication or wireless communication; a step of executing, by a controller of the vehicle, a process of starting vehicle control based on the control information; a step of executing, by a plurality of electronic control units provided in the vehicle separately from the controller, an authentication process for use authority of a service provider in parallel while executing the process of starting vehicle control; and a step of continuing or suspending the process of starting vehicle control depending on a result of an authentication process for the use authority of the service provider over the control information that is transmitted to the controller by the ECUs. The authentication process for the use authority is executed based on subscription information for determining the use authority of the service provider and the control information. The control information includes identification information of the service provider and an application programming interface, API, to be used. The subscription information includes the identification information of the service provider with the use authority over one or more APIs. The subscription information about the use authority of the service provider is composed of a block-chain managed by the plurality of electronic control units in the vehicle.

In the second aspect, the subscription information may include information that associates user identification information that identifies a user of the control information with the use authority given to the user.

A third aspect relates to a non-transitory storage medium storing a program. In the non-transitory storage medium, when the program is executed by a computer, the program causes the computer to execute the control method of the second aspect.

According to the first aspect, second aspect, and third aspect it is possible to perform appropriate authority management when use authority is set over control information for a vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view that shows the outline of a vehicle control system according to a first embodiment;
FIG. 2 is a block diagram that shows the schematic configuration of a controller according to the first embodiment;
FIG. 3 is a view that shows the structure of application programming interfaces;
FIG. 4 is a table that shows an example of subscription information;
FIG. 5 is a block diagram that shows the schematic configuration of an information processing device according to the first embodiment;
FIG. 6 is a block diagram that shows the schematic configuration of a server according to the first embodiment;
FIG. 7 is a flowchart that shows the operation of the vehicle control system according to the first embodiment;
FIG. 8 is a block diagram that shows the schematic configuration of a vehicle according to a second embodiment;
FIG. 9 is a sequence diagram that shows the operation of a vehicle control system according to the second embodiment; and
FIG. 10 is a sequence diagram that shows the operation of the vehicle control system according to the second embodiment.

### DETAILED DESCRIPTION OF EMBODIMENTS

Hereinafter, embodiments of the invention will be described.

### First Embodiment

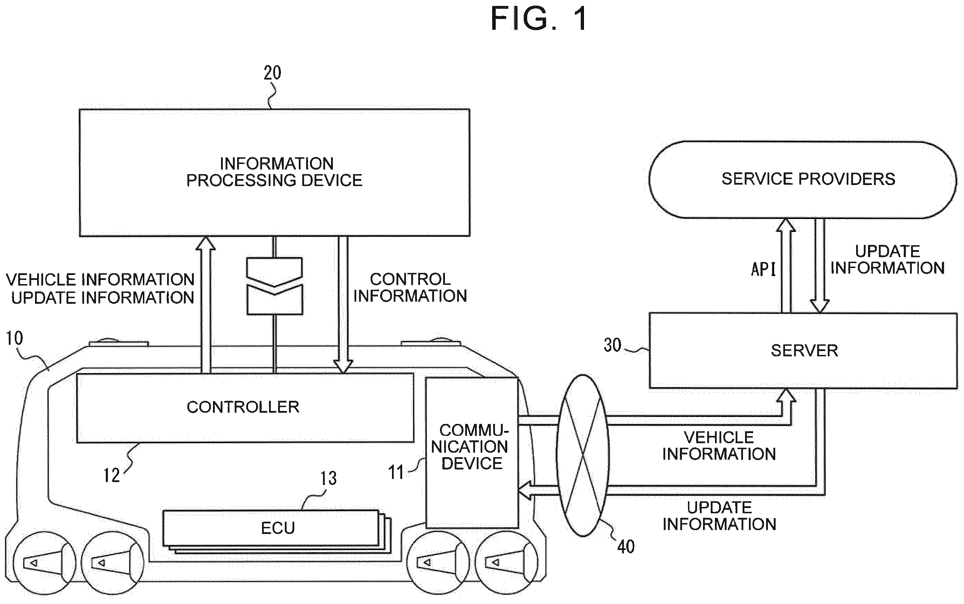

The outline of a vehicle control system 1 according to one embodiment of the invention will be described with reference to FIG. 1. The vehicle control system 1 includes a vehicle 10, an information processing device 20, and a server 30. For the sake of simple illustration, FIG. 1 shows one of each of the vehicle 10 and the information processing device 20. The number of the vehicles 10 provided in the vehicle control system 1 may be selected. The number of the information processing devices 20 provided in the vehicle control system 1 may also be selected. The vehicle 10, the information processing device 20, and the server 30 are connected to a network 40, such as the Internet.

The vehicle 10 is, for example, an automobile; however, the vehicle 10 is not limited to the automobile. The vehicle 10 may be any vehicle in which people can ride. The information processing device 20 is, for example, an automated driving kit including a computer in which automated driving control software is installed, cameras, sensors, and other devices; however, the information processing device 20 is not limited to the automated driving kit. The information processing device 20 may be any other device. The server 30 includes a single server device or a plurality of mutually communicable server devices. In the present embodiment, for the sake of simple illustration, description will be made on the assumption that the server 30 is a single server device.

In the vehicle control system 1 according to the present embodiment, the vehicle 10 and the information processing device 20 cooperate to execute vehicle control over the vehicle 10. In brief, the vehicle control system 1 includes a controller 12 (described later) that serves as an interface for the vehicle 10 to receive control information from the information processing device 20. As the vehicle 10 acquires the control information, the vehicle 10 executes a process of starting vehicle control based on the control information. At least part of application programming interfaces (APIs) that define the specifications of the control information are open to service providers. This facilitates development of technologies, creation of new mobility services, and the like, by service providers. In this case, appropriate authority management is desired. For example, only service providers having use authority are allowed to use predetermined pieces of control information (pieces of control information for controlling, for example, particular extensions). The prevention of a delay in process due to the management, the prevention of manipulation of information related to authority management, and the like, are also desired.

In the present embodiment, use authority is set over each piece of control information, and only service providers having use authority are allowed to use particular pieces of control information. In other words, only service providers having use authority over particular APIs are allowed to use the particular APIs. The vehicle control system 1 executes an authentication process for use authority. Only when a service provider that intends to use control information has corresponding use authority, the vehicle control system 1 allows vehicle control based on the control information.

While the vehicle control system 1 is executing a process of starting vehicle control, the vehicle control system 1 executes an authentication process for use authority over control information for the vehicle control. That is, a process of starting vehicle control based on each piece of control information and an authentication process for corresponding use authority are executed in parallel with each other. The vehicle 10 continues or suspends the process of starting vehicle control depending on a result of the authentication process for corresponding use authority. That is, the vehicle control system 1 executes a process of starting vehicle control based on acquired control information before getting a result of an authentication process for use authority over the control information. Since the authentication process for use authority is executed in parallel with the process of starting vehicle control, it is possible to prevent a delay in process related to the vehicle control.

Next, each component of the vehicle control system 1 will be described in detail.

### Configuration of Vehicle

As shown in FIG. 1, the vehicle 10 includes a communication device 11, the controller 12, and a plurality of electronic control units (ECUs) 13. The communication device 11, the controller 12, and the plurality of ECUs 13 are communicably connected to one another via an in-vehicle network, such as a controller area network (CAN) or an exclusive line.

The communication device 11 may be an in-vehicle communication device, such as a data communication module (DCM). The communication device 11 may include a communication module compatible with mobile communication standards, such as 4th Generation (4G) and 5th Generation (5G), in order to establish connection with the network 40.

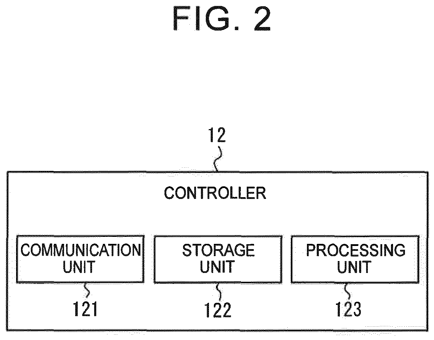

The controller 12 is a device that executes vehicle control based on control information from the information processing device 20. Vehicle control is, for example, automated driving to a destination; however, vehicle control is not limited to automated driving. Automated driving includes, for example, level 1 to level 5 defined in Society of Automotive Engineers (SAE); however, automated driving is not limited to those types of automated driving. Automated driving may be defined as any automated driving. Vehicle control is executed by cooperation of the controller 12, the ECUs 13, and other devices. As shown in FIG. 2, the controller 12 includes a communication unit 121, a storage unit 122, and a processing unit 123.

The communication unit 121 includes a communication module that carries out communication with the information processing device 20, the communication device 11, and the ECUs 13. For example, the communication unit 121 may include a communication module compatible with predetermined communication standards. Any communication protocol may be employed as a communication protocol that the communication unit 121 uses at the time of carrying out communication with the information processing device 20. The communication unit 121 and the information processing device 20 may carry out communication with each other by wired or wireless. For example, a hypertext transfer protocol (HTTP)-based representational state transfer (REST) may be employed as the communication protocol between the communication unit 121 and the information processing device 20. For example, a CAN may be employed as the communication protocol at the time when the communication unit 121 carries out communication with the communication device 11 and the ECUs 13. When the communication protocol with the information processing device 20 and the communication protocol with the communication device 11 and the ECUs 13 differ from each other, the communication unit 121 performs data conversion such that data conforms to a communication protocol with a communication destination.

The storage unit 122 includes at least one memory. In the present embodiment, the memory is, for example, a semiconductor memory, a magnetic memory, an optical memory, or the like; however, the memory is not limited to these memories. Each memory included in the storage unit 122 may serve as, for example, a main storage device, an auxiliary storage device, or a cache memory. The storage unit 122 stores any information that is used in the operation of the controller 12. For example, the storage unit 122 may store a system program, an application program, a database, and the like. Information stored in the storage unit 122 may be, for example, updatable with information that is acquired from the network 40 via the communication device 11.

The processing unit 123 includes at least one processor. In the present embodiment, the processor is a general purpose processor or a special purpose processor customized for a specific process; however, the processor is not limited to these processors. The processing unit 123 controls the overall operation of the controller 12.

For example, the processing unit 123 receives various pieces of vehicle information (such as speed, location, and automated driving status) related to the vehicle 10 from the ECUs 13, and other devices, via the communication unit 121. The processing unit 123 transmits vehicle information to the information processing device 20 via the communication unit 121. The processing unit 123 transmits vehicle information to the communication device 11 via the communication unit 121, and then the communication device 11 transmits the vehicle information to the server 30. The processing unit 123 receives update information (described later) from the communication device 11 via the communication unit 121. The update information is provided from the server 30. The processing unit 123 transmits the update information to the information processing device 20 via the communication unit 121.

When the processing unit 123 has acquired control information from the information processing device 20 via the communication unit 121, the processing unit 123 executes a process of starting vehicle control related to the vehicle 10 based on the control information. As described above, the processing unit 123 executes a process of starting vehicle control based on control information without waiting for a result of an authentication process for use authority over the control information.

The processing unit 123 executes an authentication process for use authority over control information. When the processing unit 123 includes a plurality of processors, the processing unit 123 may execute a process of starting vehicle control with the use of one processor core and may execute an authentication process with the use of another processor core different from the core that is executing the process of starting vehicle control. An authentication process for use authority is executed based on information about a service provider (service provider identification information) related to control information and an API to be used. Control information includes service provider identification information and information about an API to be used. An authentication process for use authority is executed based on these pieces of information included in the control information.

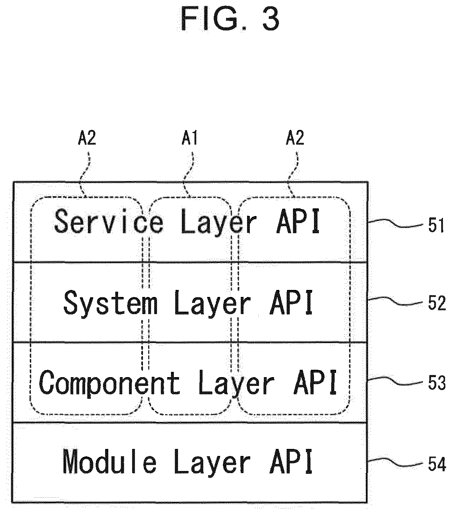

A plurality of APIs related to control information is set in accordance with the range, function, or the like, of a controlled target. FIG. 3 is a conceptual view that shows the structure of a plurality of APIs. The structure of APIs illustrated in FIG. 3 is a hierarchical structure in which a plurality of APIs is classified into layers in accordance with the range of a controlled target. In FIG. 3, the hierarchical structure is formed of four hierarchical layers, that is, API layers 51, 52, 53, 54, in order from the upper hierarchical layer. In brief, service providers are allowed to execute vehicle control without awareness of control details of a hierarchical layer lower than an upper layer with the use of an API in the upper hierarchical layer.

The API layer 51 is termed as service layer API. The API layer 51 is a hierarchical layer in which how to operate the overall vehicle 10 is packaged. For example, an API that provides automated driving service to a specified location is included in the API layer 51. The API layer 52 is termed as system layer API. The API layer 52 is a hierarchical layer that provides individual operations of systems (such as motor, steering, and map) that constitute the vehicle 10. For example, an API that provides the motor of the vehicle 10 with instructions to move forward is included in the API layer 52. When the API that provides instructions to move forward is used, vehicle speed may be determined by the vehicle 10 or may be selected from among low speed, middle speed, and high speed. The API layer 53 is termed as component layer API. The API layer 53 is a hierarchical layer that provides individual operations of components (such as acceleration/deceleration controller and stereo) that constitute the systems. For example, an API that drives the motor with a specified forward acceleration is included in the API layer 53. The API layer 54 is termed as module layer API. The API layer 54 is a hierarchical layer that provides individual operations of modules (such as torque map) that are detailed functions that constitute the components. For example, an API that provides instructions on a drive mode (such as acceleration feel) with a specified constant value of the torque map is included in the API layer 54.

Among the API layers 51, 52, 53, APIs in an open area A1 shown in FIG. 3 are open to service providers at no cost as a basic package. That is, all the service providers have use authority over APIs in the open area A1. When the controller 12 has acquired control information related to an API in the open area A1, the controller 12 does not need to execute an authentication process for use authority since all the service providers have the use authority.

Among the API layers 51, 52, 53, APIs in an open area A2 shown in FIG. 3 are open to service providers at cost as extension APIs. For example, the open area A2 is provided to service providers while the service providers are charged depending on an area to be open. Therefore, whether the APIs in the open area A2 are available varies among service providers. The API layer 54 is not open as a rule.

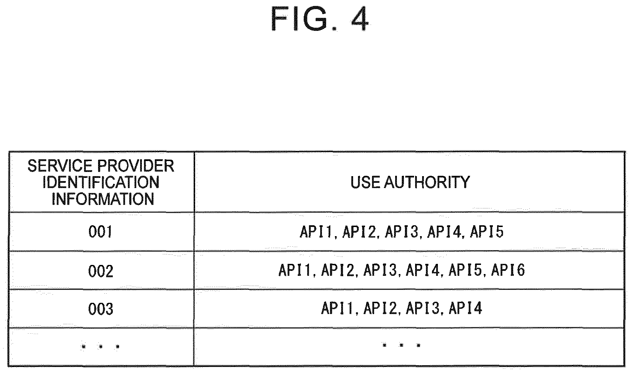

FIG. 4 shows an example of subscription information for determining use authority of each provider. The subscription information includes data that associates each piece of service provider identification information with use authority for all the service providers having use authority. For example, the subscription information is received from the server 30 via the communication device 11, and is stored in the storage unit 122. Column "service provider identification information" shows identification information that uniquely identifies a service provider. Column "use authority" shows extension APIs over which a service provider has use authority. Here, API1, API2, API3, API4, API5, API6 all are extension APIs.

As shown in FIG. 4, for example, a service provider of which the service provider identification information is "001" has use authority over API1, API2, API3, API4, API5. Based on such information, the processing unit 123 is able to execute an authentication process for use authority of each service provider. For example, when the processing unit 123 has executed an authentication process for control information related to API5 including "001" as service provider identification information, a result of the authentication process is "valid". For example, when the processing unit 123 has executed an authentication process for control information related to API6 including "001" as service provider identification information, an authentication result is "invalid" because of no use authority over that API.

The processing unit 123 continues or suspends a process of starting vehicle control depending on a result of an authentication process. For example, when an authentication result is "valid", the processing unit 123 continues the process of starting vehicle control. On the other hand, when an authentication result is "invalid", the processing unit 123 suspends the process of starting vehicle control. A process of starting vehicle control includes a process of generating control instructions (such as an instruction regarding running, turning, and stopping of the vehicle 10) based on control information, and a process of transmitting the generated control instructions to the ECUs 13 via the communication unit 121. When a process of starting vehicle control is continued, a process of generating and transmitting control instructions is continued, so control over the vehicle 10 in accordance with the control instructions is executed. On the other hand, when a process of starting vehicle control is suspended, a process of generating and transmitting control instructions is suspended. In this case, no control instructions are transmitted to the ECUs 13, so control over the vehicle 10 in accordance with control instructions is not executed. When the processing unit 123 suspends a process of starting vehicle control, the processing unit 123 may transmit information about suspension of the process of starting vehicle control to the information processing device 20 via the communication unit 121.

The plurality of ECUs 13 executes vehicle control in cooperation with the controller 12. Specifically, the plurality of ECUs 13 receives control instructions based on control information from the controller 12, and controls the vehicle 10 in accordance with the control instructions. The control instructions include, for example, acceleration, deceleration, braking, steering operation, stereo operation, air-conditioner operation, security alarm, and the like, of the vehicle 10. The plurality of ECUs 13 executes these controls over power sources, in-vehicle devices, and the like, based on the control instructions. The plurality of ECUs 13 collects vehicle information of the vehicle 10, and transmits the vehicle information to the controller 12.

### Configuration of Information Processing Device

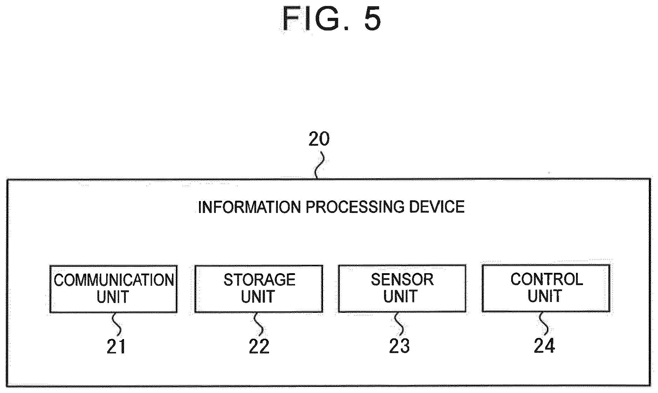

As shown in FIG. 5, the information processing device 20 includes a communication unit 21, a storage unit 22, a sensor unit 23, and a control unit 24. The information processing device 20 is mounted at, for example, the roof top or other location of the vehicle 10. A location at which the information processing device 20 is mounted is not limited to the roof top. The information processing device 20 may be mounted at any location outside the vehicle 10 or in a vehicle cabin.

The communication unit 21 includes a communication module that establishes connection with the controller 12 of the vehicle 10. For example, the communication unit 21 establishes connection with the controller 12 by a wired network or wireless network.

The storage unit 22 includes at least one memory. Each memory included in the storage unit 22 may serve as, for example, a main storage device, an auxiliary storage device, or a cache memory. The storage unit 22 stores any information that is used in the operation of the information processing device 20. For example, the storage unit 22 may store a system program, an application program, service provider identification information, and the like. The application program includes the above-described automated driving control software. In this case, the automated driving control software causes the information processing device 20 to serve as an automated driving kit. Information stored in the storage unit 22 may be, for example, updatable with update information that is acquired from controller 12 via the communication unit 21.

The sensor unit 23 includes at least one sensor that detects information about the operation or surrounding environment of the information processing device 20. For example, the sensor unit 23 may include a LIDAR (Light Detection and Ranging), an acceleration sensor, an angular velocity sensor, a magnetic sensor, an atmospheric pressure sensor, and the like. The sensor unit 23 is not limited to these sensors. The sensor unit 23 may include any sensor, such as an illuminance sensor, a temperature sensor, and an image sensor (camera). The sensor unit 23 acquires information, detected by each sensor, as sensor information. For example, the sensor information acquired by the sensor unit 23 may include information detected by a LIDAR, an acceleration, an angular velocity, a magnetic field, an atmospheric pressure, and the like.

The control unit 24 includes at least one processor. The control unit 24 controls the overall operation of the information processing device 20.

For example, the control unit 24 stores sensor information, acquired by the sensor unit 23, in the storage unit 22. The control unit 24 receives vehicle information and update information from the controller 12 via the communication unit 21. The control unit 24 generates control information based on the sensor information, the vehicle information, and other information, and transmits the control information to the controller 12 via the communication unit 21. When service provider identification information is stored in the storage unit 22, the control unit 24 may generate control information by using the stored service provider identification information.

### Configuration of Server

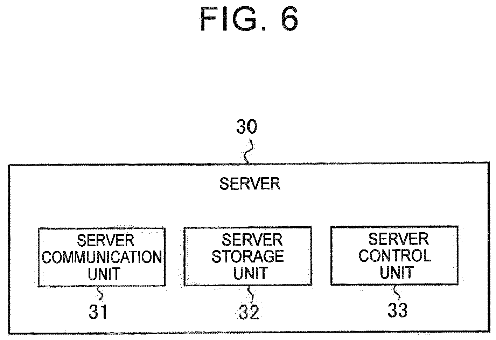

As shown in FIG. 6, the server 30 includes a server communication unit 31, a server storage unit 32, and a server control unit 33.

The server communication unit 31 includes a communication module that establishes connection with the network 40. For example, the server communication unit 31 may include a communication module compatible with predetermined wired standards or wireless standards. In the present embodiment, the server 30 is connected to the network 40 via the server communication unit 31.

The server storage unit 32 includes at least one memory. Each memory included in the server storage unit 32 may serve as, for example, a main storage device, an auxiliary storage device, or a cache memory. The server storage unit 32 stores any information that is used in the operation of the server 30. For example, the server storage unit 32 may store a system program, an application program, a management database, and the like. Information stored in the server storage unit 32 may be, for example, updatable with information that is acquired from the network 40 via the server communication unit 31.

The server control unit 33 shown in FIG. 6 includes at least one processor. The server control unit 33 controls the overall operation of the server 30.

For example, the server control unit 33 receives vehicle information from the vehicle 10 via the server communication unit 31. The server control unit 33 may store vehicle information in the server storage unit 32, and provide service providers with information required for various finance, such as a lease and an insurance, concerned with the vehicle 10, cooperative vehicle maintenance with dealers, or the like, based on the stored information. The server control unit 33 may open APIs with which service providers are allowed to manage required information, such as status and behavior of the vehicle 10, based on the stored information. Service providers are allowed to easily get required information via the APIs.

The server control unit 33 may manage subscription information. For example, the server control unit 33 may execute a process related to an application for use of an API from a service provider, an update of the use, a termination of the use, and the like, and generate and update the subscription information. The server control unit 33 may transmit the subscription information to the vehicle 10 via the server communication unit 31.

The server control unit 33 may transmit update information about the system program, application program, and the like, of the information processing device 20 to the vehicle 10 via the server communication unit 31. The vehicle 10 receives the update information with the use of the communication device 11, and transmits the update information to the information processing device 20 via the controller 12. In other words, service providers associated with the information processing device 20 are allowed to provide update information related to the information processing device 20 from the server 30 over the air (OTA). Thus, it is possible to easily perform maintenance, update, and the like, of the information processing device 20.

### Operation Flow of Information Processing System

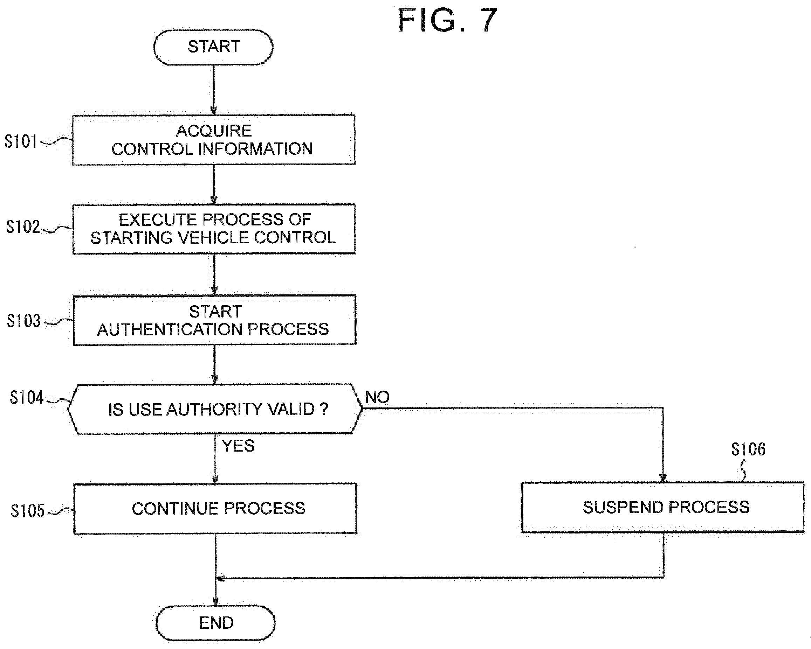

As shown in FIG. 7, the flow of operation of the vehicle control system 1 will be described. The vehicle control system 1 executes the following step S101 to step S106 each time the vehicle control system 1 acquires control information from the information processing device 20.

In step S101, the information processing device 20 transmits control information to the vehicle 10. The controller 12 of the vehicle 10 acquires the control information transmitted from the information processing device 20.

In step S102, the controller 12 of the vehicle 10 executes a process of starting vehicle control related to the vehicle 10 based on the control information.

In step S103, the controller 12 of the vehicle 10 starts and executes an authentication process for use authority over the control information while executing the process of starting vehicle control.

In step S104, as a result of the authentication process, when the controller 12 determines that use authority over the control information is valid (YES in step S104), the process proceeds to step S105. On the other hand, as a result of the authentication process, when the controller 12 determines that use authority over the control information is not valid (NO in step S104), the process proceeds to step S106.

In step S105, the controller 12 continues the process of starting vehicle control. That is, the process of starting vehicle control is executed until the process ends, and the controller 12 transmits control instructions to the ECUs 13.

In step S106, the controller 12 suspends the process of starting vehicle control. That is, the process of starting vehicle control is suspended before the process ends, and the controller 12 does not generate control instructions. Even if the controller 12 has generated control instructions, the controller 12 does not transmit the generated control instructions to the ECUs 13.

As described above, according to the first embodiment, in the case where use authority is set over control information of the vehicle 10, the controller 12 of the vehicle 10 continues or suspends a process of starting vehicle control depending on a result of an authentication process for corresponding use authority, so it is possible to perform appropriate authority management. When the controller 12 has acquired control information from the information processing device 20, the controller 12 executes a process of starting vehicle control based on the control information. An authentication process is executed while a process of starting vehicle control is being executed, and the controller 12 continues or suspends the process of starting vehicle control depending on a result of the authentication process. In this way, with the vehicle control system 1 according to the present embodiment, a process of starting vehicle control is executed after control information is acquired from the information processing device 20 without waiting for a result of an authentication process. Therefore, it is possible to appropriately prevent a delay in vehicle control.

### Second Embodiment

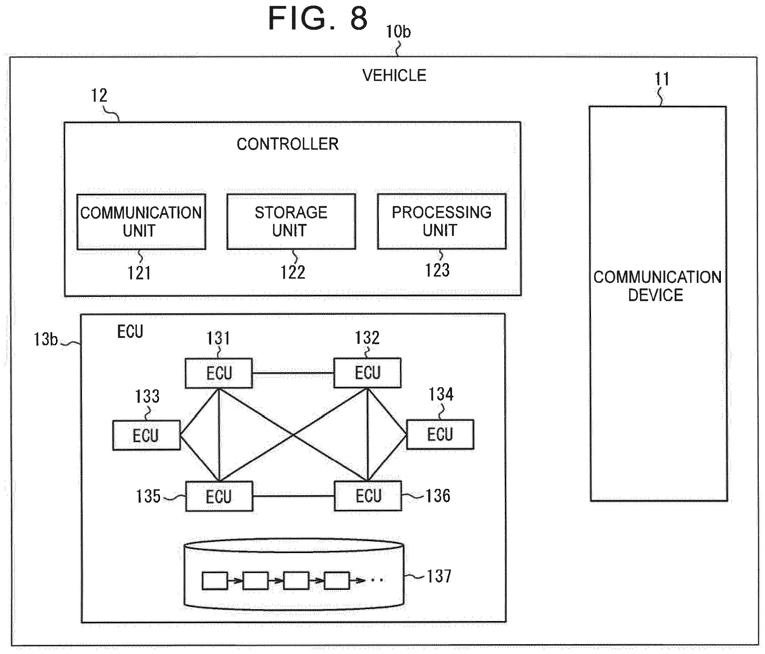

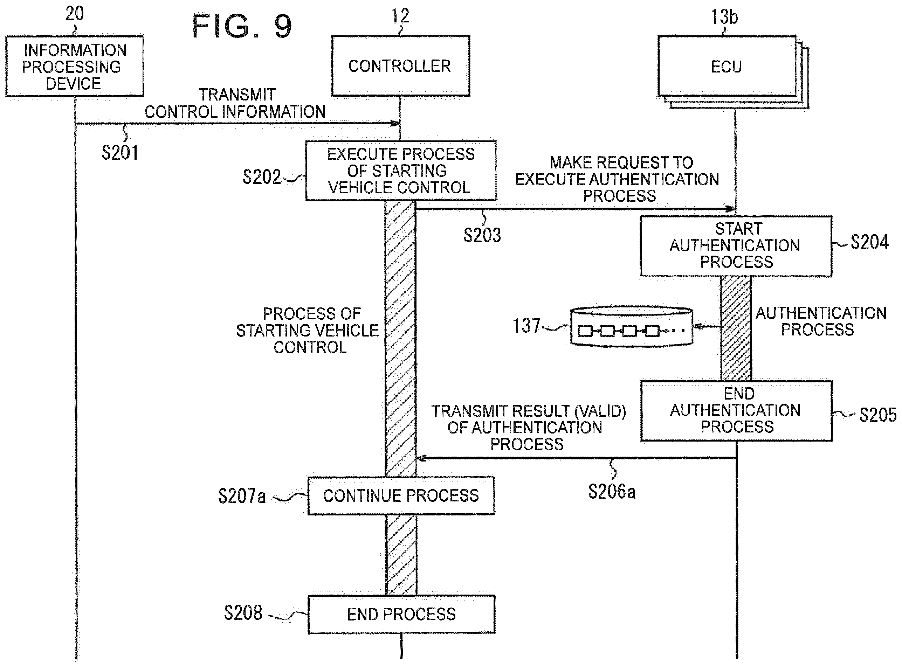

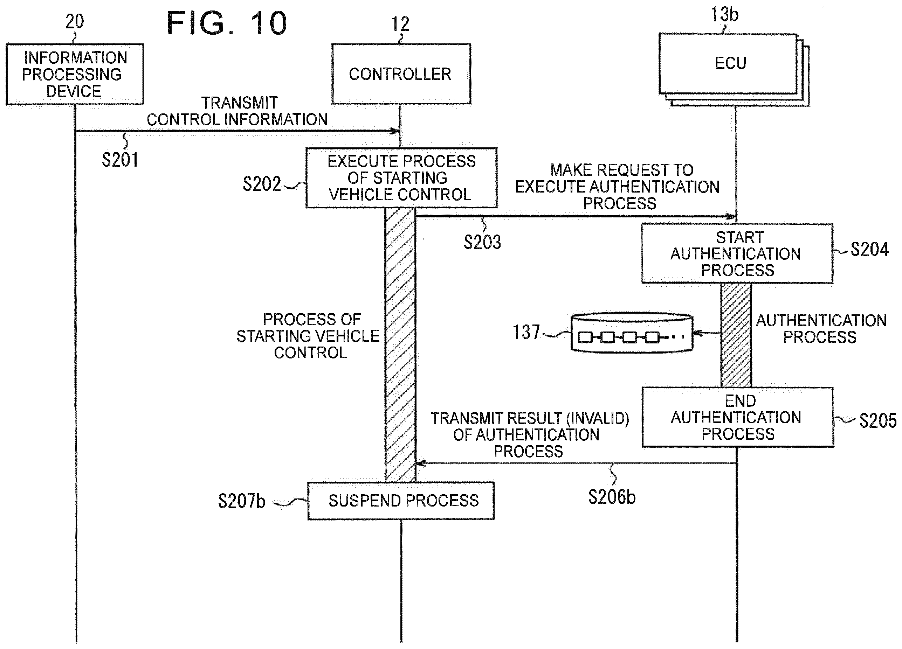

Next, a second embodiment will be described. FIG. 8 is a block diagram that shows the schematic configuration of a vehicle 10b according to the second embodiment of the invention. Like reference signs denote the same components as those of the first embodiment, and the description thereof is omitted. The vehicle 10b according to the second embodiment differs from the vehicle 10 according to the first embodiment in that subscription information required at the time of an authentication process for use authority is composed of a block-chain 137 that each ECU 13b manages. That is, ECUs 131, 132, 133, 134, 135, 136 are connected to each other in a peer-to-peer (P2P) architecture. Each of the ECUs 131, 132, 133, 134, 135, 136 has the block-chain 137, and serves as a node that manages the block-chain 137. The ECUs 131, 132, 133, 134, 135, 136 execute an authentication process for use authority with the use of the block-chain 137. For the sake of simple illustration, the six ECUs 13b are shown; however, the number of ECUs may be selected. Hereinafter, the flow of operation of the vehicle control system 1 according to the second embodiment will be described with reference to FIG. 9 and FIG. 10.

In step S201, the information processing device 20 transmits control information to the vehicle 10b. The controller 12 of the vehicle 10b acquires the control information transmitted from the information processing device 20. This step corresponds to step S101 of the first embodiment.

In step S202, the controller 12 of the vehicle 10b executes a process of starting vehicle control related to the vehicle 10b based on the control information. This step corresponds to step S102 of the first embodiment.

In step S203, the controller 12 makes a request of the ECUs 13b to execute an authentication process for use authority over the control information.

In step S204, the ECUs 13b that have received a request for the authentication process start the authentication process.

In step S205, the ECUs 13b execute the authentication process based on subscription information composed of the block-chain 137, and end the process.

In step S206a, the ECUs 13b transmit a result of the authentication process to the controller 12. The case where the result of the authentication process is valid will be described.

In step S207a, the controller 12 receives the result of the authentication process. Since the authentication result is valid, the controller 12 continues the process of starting vehicle control.

In step S208, the controller 12 ends the process of starting vehicle control. That is, the controller 12 transmits generated control instructions to the ECUs 13b.

FIG. 10 shows the flow of operation in the case where the authentication result is invalid. Like reference signs denote the same operations as those of FIG. 9, and the description thereof is omitted. In FIG. 9, the authentication result is invalid, and the ECUs 13b transmit the result to the controller 12 (step S206b). In this case, the controller 12 suspends the process of starting vehicle control (step S207b).

As described above, according to the second embodiment, in the case where use authority is set over control information of the vehicle 10b, the controller 12 of the vehicle 10b continues or suspends a process of starting vehicle control depending on a result of an authentication process for corresponding use authority, so it is possible to perform appropriate authority management. Subscription information required for an authentication process for use authority is composed of the block-chain 137. Therefore, manipulation of the subscription information is extremely difficult, so it is possible to enhance the reliability of authority management. Each of the ECUs 13b has subscription information composed of the block-chain 137. Therefore, even if corruption, or the like, of the subscription information of any one of the ECUs 13b has occurred, the subscription information is able to be restored based on the subscription information of another one of the ECUs 13b, so it is possible to enhance the availability of the system. Furthermore, by using the ECUs 13b of the vehicle 10b as the nodes of the block-chain 137, it is not required to use another computer, or the like, for managing the block-chain 137, so it is possible to reduce cost associated with system construction.

The invention is described with reference to the drawings and the embodiments, and it should be noted that a person skilled in the art is able to easily make various modifications and corrections with reference to the disclosure. Therefore, it should be noted that the scope of the invention encompasses such modifications and corrections. For example, functions, and the like, included in each means, each step, or the like, are changeable without any logical contradiction. A plurality of means, steps, or the like, may be combined with each other, or each of the plurality of means, steps, or the like, may be divided.

For example, in the above-described embodiments, the following case is described. An authentication process for use authority is executed after the controller 12 executes a process of starting vehicle control by using the fact that the process of starting vehicle control has a higher processing load than the authentication process for use authority, and there is a high possibility that it takes time to execute the process. In this way as well, there is a high possibility that an authentication result is obtained before a process of starting vehicle control ends, so it is possible to prevent a delay in process. When an authentication process for use authority is executed simultaneously with execution of a process of starting vehicle control by the controller 12, it is possible to further increase the possibility that an authentication result is obtained before the end of the process of starting vehicle control. It is also possible to execute an authentication process for use authority before execution of a process of starting vehicle control by the controller 12. In either one of the cases, by handling a process of starting vehicle control and an authentication process in parallel with each other, it is possible to prevent a delay in process as compared to the case where a process of starting vehicle control is executed after an authentication result is obtained. Even if an authentication result is not obtained by the end of a process of starting vehicle control, the controller 12 does not transmit control instructions based on the process of starting vehicle control until the authentication result is obtained. That is, the controller 12 waits until an authentication result is obtained, and determines whether to transmit control instructions depending on the result of the authentication process. With this configuration, it is possible to perform appropriate authority management.

For example, in the above-described embodiments, each time control information is acquired, an authentication process for use authority is executed, and vehicle control is continued or suspended depending on a result of the authentication process; however, the frequency of authentication process may be changed as needed. For example, when an authentication process has been executed once for each piece of control information, an authentication process for the control information does not need to be executed again within a trip in which the authentication process has been executed. That is, when an authentication process has been executed once within a period of time from when an ignition is turned on to when the ignition is turned off, an authentication process does not need to be executed again within the period of time. With this configuration, it is possible to reduce a processing load due to an authentication process.

For example, in the above-described embodiments, an example in which APIs related to control information are formed of four hierarchical layers, that is, the API layers 51, 52, 53, 54, is described; however, the number of hierarchical layers is not limited to four, and may be larger than or smaller than four. As for which hierarchical layer each API is classified, classification is not limited to the above-described embodiments, and may be selectively set. The structure of each API does not need to be a hierarchical structure. Any other structure may be employed. In the above-described embodiments, an example in which the open area A1 shown in FIG. 3 is open at no cost is described; however, the open area A1 may also be open at cost. In the present embodiments, the case where use authority over APIs is given based on charges to service providers is described; however, a method of setting use authority is not limited to this method. Use authority may be given to service providers based on a selected condition.

For example, in the above-described embodiments, an example in which the storage unit 122 stores the subscription information of all the service providers having use authority over control information is described; however, the invention is not limited to this configuration. For example, only the subscription information of service providers that are likely to use control information of the vehicle 10 among all the service provides having use authority over the control information may be stored in the storage unit 122. Whether a service provider is likely to use control information of the vehicle 10 may be determined by, at the time of connecting the information processing device 20 to the vehicle 10 for the first time, transmitting service provider identification information from the information processing device 20 to the controller 12.

For example, in the first embodiment, the controller 12 executes an authentication process for use authority; however, the invention is not limited to this configuration. In the first embodiment, the ECUs 13 may execute an authentication process while a process of starting vehicle control is being executed, and the controller 12 may receive a result to continue or suspend the process of starting vehicle control. In this case as well, a process of starting vehicle control is continued or suspended depending on an authentication result, so it is possible to perform appropriate authority management. After control information is acquired from the information processing device 20, a process of starting vehicle control is executed without waiting for a result of an authentication process, so it is possible to appropriately prevent a delay in vehicle control. The controller 12 may make a request of the server 30, or another device, other than the ECUs 13, to execute an authentication process. In this case, the processing unit 123 may transmit a request of the server 30 to execute an authentication process via the communication device 11, and may receive a result of the authentication process from the server 30. When an authentication process for use authority is executed by the ECUs 13 or the server 30, the ECUs 13 or the server 30 should have subscription information.

For example, in the second embodiment, an example in which each of the ECUs 13b of the vehicle 10b is used as a node that manages the block-chain 137 is described. Instead, the controller 12 may be used as a node that manages the block-chain 137. An ECU of another surrounding vehicle may be used as a node that manages the block-chain 137. In this case, the vehicle 10b may be connected to another surrounding vehicle by vehicle-to-vehicle communication. The server 30 may be used as a node that manages the block-chain 137. That is, any computer may serve as a node that manages the block-chain 137.

For example, a general purpose electronic device may be configured to serve as the controller 12 according to the above-described embodiments. Specifically, a program that describes process details for implementing the functions of the controller 12 according to the embodiments is stored in a memory of the electronic device, the program is read by a processor of the electronic device, and the program is executed by the processor. Therefore, the invention of the present embodiments may be implemented as a program executable on a processor.

Other than the above-described example, examples of the network 40 according to the present embodiments include an ad hoc network, a local area network (LAN), a metropolitan area network (MAN), a cellular network, a wireless personal area network (WPAN), a public switched telephone network (PSTN), a terrestrial wireless network, an optical network, another network, and a combination of some of these networks. Elements of a wireless network include, for example, an access point (such as a Wi-Fi access point), a femtocell, and the like. Furthermore, a wireless communication device is able to establish connection with a wireless network that uses Wi-Fi (registered trademark), Bluetooth (registered trademark), a cellular communication technology, or another wireless technology, and a technical standard.

## Claims

1. A controller (12) forming part of a vehicle (10b) in a vehicle control system (1) including the vehicle (10), an information processing device (20), and a server (30), the controller (12) comprising:
a communication unit (121) configured to acquire control information for the vehicle (10b) from the information processing device (20) via wired communication or wireless communication; and
a processing unit (123) configured to execute a process of starting vehicle control based on the control information and to request a plurality of electronic control units (13b) provided in the vehicle (10b) separately from the controller (12) to execute an authentication process for use authority of a service provider in parallel while executing the process of starting vehicle control, wherein
the authentication process for the use authority is executed based on subscription information for determining the use authority of the service provider and the control information, wherein
the control information includes identification information of the service provider and an application programming interface, API, to be used,
the subscription information includes the identification information of the service provider with the use authority over one or more APIs, and
the subscription information about the use authority of the service provider is composed of a block-chain (137) managed by the plurality of electronic control units (13b) in the vehicle (10b), wherein
the processing unit (123) is configured to continue or suspend the process of starting vehicle control depending on a result of the authentication process for the use authority of the service provider over the control information that is transmitted to the controller (12) by the ECUs (13b).

2. The controller (12) according to claim 1, wherein the processing unit (123) is configured to continue or suspend the process of starting the vehicle control depending on the result of the authentication process each time the control information is acquired.

3. The controller (12) according to claim 1, wherein the subscription information includes information that associates user identification information that identifies a user of the control information with the use authority given to the user.

4. A control method comprising:
a step (S201) of acquiring control information for a vehicle (10b) from an information processing device (20) via wired communication or wireless communication;
a step (S202) of executing, by a controller (12) of the vehicle (10b), a process of starting vehicle control based on the control information;
a step (S205) of executing, by a plurality of electronic control units (13b) provided in the vehicle (10b) separately from the controller (12), an authentication process for use authority of a service provider in parallel while executing the process of starting vehicle control; and
a step of continuing (S207a) or suspending (S207b) the process of starting vehicle control depending on a result of the authentication process for the use authority of the service provider over the control information that is transmitted to the controller (12) by the ECUs (13b), wherein
the authentication process for the use authority is executed based on subscription information for determining the use authority of the service provider and the control information, wherein
the control information includes identification information of the service provider and an application programming interface, API, to be used,
the subscription information includes the identification information of the service provider with the use authority over one or more APIs, and the subscription information about the use authority of the service provider is composed of a block-chain (137) managed by the plurality of electronic control units (13b) in the vehicle (10b).

5. The control method according to claim 4, wherein the subscription information includes information that associates user identification information that identifies a user of the control information with the use authority given to the user.

6. A non-transitory storage medium storing a program, wherein, when the program is executed by a computer, the program causes the computer to execute the control method according to claim 5.

## Patentansprüche

1. Controller (12), der Teil eines Fahrzeugs (10b) in einem Fahrzeugsteuersystem (1) ist, welches das Fahrzeug (10), eine Informationsverarbeitungsvorrichtung (20) und einen Server (30) umfasst, wobei der Controller (12) aufweist:
eine Kommunikationseinheit (121), die eingerichtet ist, Steuerinformationen für das Fahrzeug (10b) von der Informationsverarbeitungsvorrichtung (20) über drahtgebundene Kommunikation oder drahtlose Kommunikation zu erlangen; und
eine Verarbeitungseinheit (123), die eingerichtet ist, einen Prozess des Startens einer Fahrzeugsteuerung basierend auf den Steuerinformationen auszuführen und eine Mehrzahl von elektronischen Steuereinheiten (13b), die in dem Fahrzeug (10b) getrennt von dem Controller (12) vorgesehen sind, zum Ausführen eines Authentifizierungsprozesses für eine Nutzungsberechtigung eines Dienstanbieters aufzufordern, während sie parallel den Prozess des Startens einer Fahrzeugsteuerung ausführt, wobei
der Authentifizierungsprozess für die Nutzungsberechtigung basierend auf Teilnehmerinformationen zum Bestimmen der Nutzungsberechtigung des Dienstanbieters und den Steuerinformationen ausgeführt wird, wobei
die Steuerinformationen Identifikationsinformationen des Dienstanbieters und einer zu verwendenden Anwendungsprogrammierschnittstelle, API, umfassen,
die Teilnehmerinformationen die Identifikationsinformationen des Dienstanbieters mit der Nutzungsberechtigung gegenüber einer oder mehreren APIs umfassen, und
die Teilnehmerinformationen über die Nutzungsberechtigung des Dienstanbieters aus einer Block-Chain (137) bestehen, die durch die Mehrzahl von elektronischen Steuereinheiten (13b) in dem Fahrzeug (10b) verwaltet ist, wobei
die Verarbeitungseinheit (123) eingerichtet ist, den Prozess des Startens einer Fahrzeugsteuerung in Abhängigkeit von einem Ergebnis des Authentifizierungsprozesses für die Nutzungsberechtigung des Dienstanbieters gegenüber den Steuerinformationen, welche durch die ECUs (13b) an den Controller (12) übertragen sind, fortzuführen oder auszusetzen.

2. Controller (12) nach Anspruch 1, wobei die Verarbeitungseinheit (123) eingerichtet ist, den Prozess des Startens der Fahrzeugsteuerung in Abhängigkeit von dem Ergebnis des Authentifizierungsprozesses jedes Mal dann, wenn die Steuerinformationen erlangt sind, fortzuführen oder auszusetzen.

3. Controller (12) nach Anspruch 1, wobei die Teilnehmerinformationen Informationen umfassen, welche Nutzeridentifikationsinformationen, die einen Nutzer der Steuerinformationen identifizieren, mit der Nutzungsberechtigung des Nutzers verknüpfen.

4. Steuerverfahren, aufweisend:
einen Schritt (S201) des Erlangens von Steuerinformationen für ein Fahrzeug (10b) von einer Informationsverarbeitungsvorrichtung (20) über drahtgebundene Kommunikation oder drahtlose Kommunikation;
einen Schritt (S202) des Ausführens, durch einen Controller (12) des Fahrzeugs (10b), eines Prozesses des Startens einer Fahrzeugsteuerung basierend auf den Steuerinformationen;
einen Schritt (S205) des Ausführens, durch eine Mehrzahl von elektronischen Steuereinheiten (13b), die in dem Fahrzeug (10b) getrennt von dem Controller (12) vorgesehen sind, eines Authentifizierungsprozesses für eine Nutzungsberechtigung eines Dienstanbieters, während parallel der Prozess des Startens einer Fahrzeugsteuerung ausgeführt wird; und
einen Schritt des Fortführens (S207a) oder Aussetzens (S207b) des Prozesses des Startens einer Fahrzeugsteuerung in Abhängigkeit von einem Ergebnis des Authentifizierungsprozesses für die Nutzungsberechtigung des Dienstanbieters gegenüber den Steuerinformationen, die durch die ECUs (13b) an den Controller (12) übertragen werden, wobei
der Authentifizierungsprozess für die Nutzungsberechtigung basierend auf Teilnehmerinformationen zum Bestimmen der Nutzungsberechtigung des Dienstanbieters und den Steuerinformationen ausgeführt wird, wobei
die Steuerinformationen Identifikationsinformationen des Dienstanbieters und einer zu verwendenden Anwendungsprogrammierschnittstelle, API, umfassen,
die Teilnehmerinformationen die Identifikationsinformationen des Dienstanbieters mit der Nutzungsberechtigung gegenüber einer oder mehreren APIs umfassen und die Teilnehmerinformationen über die Nutzungsberechtigung des Dienstanbieters aus einer Blockchain (137) bestehen, welche durch die Mehrzahl von elektronischen Steuereinheiten (13b) in dem Fahrzeug (10b) verwaltet wird.

5. Steuerverfahren nach Anspruch 4, wobei die Teilnehmerinformationen Informationen umfassen, welche Nutzeridentifikationsinformationen, die einen Nutzer der Steuerinformationen identifizieren, mit der Nutzungsberechtigung des Nutzers verknüpfen.

6. Nicht-flüchtiges Speichermedium, das ein Programm speichert, wobei, wenn das Programm durch einen Computer ausgeführt wird, das Programm den Computer veranlasst, das Steuerverfahren nach Anspruch 5 auszuführen.

## Revendications

1. Circuit de commande (12) formant une partie d'un véhicule (10b) dans un système de commande de véhicule (1) comprenant le véhicule (10), un dispositif de traitement de l'information (20), et un serveur (30), le circuit de commande (12) comprenant :
une unité de communication (121) configurée pour acquérir de l'information de commande pour le véhicule (10b) provenant du dispositif de traitement de l'information (20) par l'intermédiaire d'une communication filaire ou d'une communication sans fil ; et
une unité de traitement (123) configurée pour exécuter un processus de démarrage de commande de véhicule sur la base de l'information de commande et pour demander à une pluralité d'unités de commande électroniques (13b) prévues dans le véhicule (10b) séparément du circuit de commande (12) d'exécuter un processus d'authentification pour une autorité d'utilisation d'un fournisseur de services en parallèle tout en exécutant le processus de démarrage de commande de véhicule, dans lequel
le processus d'authentification pour l'autorité d'utilisation étant exécuté sur la base d'une information d'abonnement pour déterminer l'autorité d'utilisation du fournisseur de services et de l'information de commande, dans lequel
l'information de commande comprenant de l'information d'identification du fournisseur de services et une interface de programmation d'application, API, devant être utilisées,
l'information d'abonnement comprenant l'information d'identification du fournisseur de services avec l'autorité d'utilisation sur une ou plusieurs interfaces de programmation d'application, et
l'information d'abonnement concernant l'autorité d'utilisation du fournisseur de services se composant d'une chaîne de blocs (137) gérée par la pluralité d'unités de commande électroniques (13b) dans le véhicule (10b), dans lequel
l'unité de traitement (123) étant configurée pour poursuivre ou suspendre le processus de démarrage de commande de véhicule en fonction d'un résultat du processus d'authentification pour l'autorité d'utilisation du fournisseur de services sur l'information de commande qui est transmise au circuit de commande (12) par les unités de commande électroniques (13b).

2. Circuit de commande (12) selon la revendication 1, dans lequel l'unité de traitement (123) est configurée pour poursuivre ou suspendre le processus de démarrage de commande de véhicule en fonction du résultat du processus d'authentification chaque fois que l'information de commande est acquise.

3. Circuit de commande (12) selon la revendication 1, dans lequel l'information d'abonnement comprend de l'information qui associe de l'information d'identification de l'utilisateur qui identifie un utilisateur de l'information de commande et l'autorité d'utilisation donnée à l'utilisateur.

4. Procédé de commande comprenant :
une étape (S201) d'acquisition d'information de commande pour un véhicule (10b) à partir d'un dispositif de traitement de l'information (20) par l'intermédiaire d'une communication filaire ou d'une communication sans fil ;
une étape (S202) d'exécution, par un circuit de commande (12) du véhicule (10b), d'un processus de démarrage de commande de véhicule sur la base de l'information de commande ;
une étape (S205) d'exécution, par une pluralité d'unités de commande électroniques (13b) prévues dans le véhicule (10b) séparément du circuit de commande (12), d'un processus d'authentification pour une autorité d'utilisation d'un fournisseur de services en parallèle tout en exécutant le processus de démarrage de commande de véhicule ; et
une étape de poursuite (S207a) ou de suspension (S207b) du processus de démarrage de commande de véhicule en fonction d'un résultat du processus d'authentification pour l'autorité d'utilisation du fournisseur de services sur l'information de commande qui est transmise au circuit de commande (12) par les unités de commande électroniques (13b), dans lequel
le processus d'authentification pour l'autorité d'utilisation étant exécuté sur la base d'une information d'abonnement pour déterminer l'autorité d'utilisation du fournisseur de services et l'information de commande, dans lequel
l'information de commande comprenant de l'information d'identification du fournisseur de services et une interface de programmation d'application, API, devant être utilisées,
l'information d'abonnement comprenant l'information d'identification du fournisseur de services avec l'autorité d'utilisation sur une ou plusieurs interfaces de programmation d'application, et l'information d'abonnement concernant l'autorité d'utilisation du fournisseur de services se compose d'une chaîne de blocs (137) gérée par la pluralité d'unités de commande électroniques (13b) dans le véhicule (10b).

5. Procédé de commande selon la revendication 4, selon lequel l'information d'abonnement comprend de l'information qui associe l'information d'identification de l'utilisateur qui identifie un utilisateur de l'information de commande et l'autorité d'utilisation donnée à l'utilisateur.

6. Support de stockage non-transitoire stockant un programme, dans lequel, quand le programme est exécuté par un ordinateur, le programme amène l'ordinateur à exécuter le procédé de commande selon la revendication 5.
